# EUROPÄISCHE PATENTSCHRIFT

(11) **EP 3 670 951 B1**
(45) Veröffentlichungstag und Bekanntmachung des Hinweises auf die Patenterteilung: **24.08.2022**
(21) Anmeldenummer: 20161197.7
(22) Anmeldetag: 05.03.2020
(51) Int. Cl.: F16D 1/08

(54) **VERFAHREN ZUM FÜGEN EINER WELLE MIT EINER NABE, INSBESONDERE FÜR EINE VAKUUMPUMPE**
METHOD FOR JOINING A SHAFT WITH A HUB, IN PARTICULAR FOR A VACUUM PUMP
PROCÉDÉ D'ASSEMBLAGE D'UN ARBRE AVEC UN MOYEU, EN PARTICULIER POUR UNE POMPE À VIDE

(43) Veröffentlichungstag der Anmeldung: 24.06.2020
(73) Patentinhaber: Pfeiffer Vacuum Technology AG, 35614 Asslar (DE)
(72) Erfinder: Bader, Florian, 35625 Hüttenberg (DE); Donner, Jonathan, 35753 Greifenstein (DE); Hotopp, Frank, 35510 Butzbach (DE)
(74) Vertreter: Manitz Finsterwald Patent- und Rechtsanwaltspartnerschaft mbB

(56) Entgegenhaltungen:
- EP-A1- 3 088 745
- DE-A1- 4 018 959
- DE-A1-102015 007 470
- DE-A1-102016 200 628
- DE-A1-102017 201 578
- DE-A1-102018 003 823
- DE-A1-102018 118 943
- DE-C2- 4 018 959

## Beschreibung

Die vorliegende Erfindung betrifft ein Verfahren zum Fügen einer Welle mit einer Nabe, insbesondere einer Rotorwelle einer Vakuumpumpe mit einer Nabe, welche ein pumpaktives Rotorelement trägt oder umfasst, wobei die Welle und die Nabe mittels Querpressen gefügt werden, und wobei an der Welle und an der Nabe jeweils wenigstens eine Fügefläche zur Bildung wenigstens eines Presssitzes ausgebildet werden.

Die EP 3 088 745 A1 beschreibt ein Verfahren zum Fügen einer Rotorwelle einer Vakuumpumpe mit einer Nabe. Die DE 10 2018 003 823 A1, DE 10 2016 200 628 A1, DE 10 2018 118 943 A1, DE 10 2017 201 578 A1, DE 10 2015 007 470 A1 und DE 40 18 959 A1 beschreiben Fügeverfahren für Welle-Nabe-Verbindungen allgemeinerer Art.

Zylindrische Pressverbände sind gängig als Welle-Nabe-Verbindung. Im vorliegenden Fall handelt es sich um einen sogenannten Querpressverband, der mittels Temperierung der Bauteile hergestellt wird, insbesondere durch Erwärmen der Nabe. Allgemein basiert das Querpressen auf der Ausnutzung der temperaturabhängigen Ausdehnung bzw. Schrumpfung von Bauteilen. So wird beispielsweise ein Nabenbauteil erwärmt, hierdurch ausgedehnt, auf eine Welle gesteckt und abkühlen gelassen. Dabei schrumpft das Nabenbauteil, sodass es - bei entsprechender Dimensionierung von hierfür vorgesehenen Fügeflächen - einen Pressverband mit der Welle bildet. Man spricht in diesem Zusammenhang auch vom Aufschrumpfen.

Bei der Nabe kann es sich beispielsweise um einen Kolben einer Wälzkolbenpumpe handeln. Üblicherweise wird das komplette Bauteil, welches den Kolben bildet, in einem Ofen erwärmt, was energie- und zeitaufwändig ist.

Es ist eine Aufgabe der Erfindung, den Energie- und/oder Zeitaufwand beim Fügen einer Welle und einer Nabe mittels Querpressen zu reduzieren.

Diese Aufgabe wird durch ein Verfahren gemäß Anspruch 1 gelöst, und insbesondere dadurch, dass die Welle und/oder die Nabe zur Herstellung der Querpressverbindung lediglich lokal temperiert wird.

Der nötige Energieaufwand zum ausreichenden Verformen der Welle bzw. der Nabe wird somit erheblich reduziert. Auch nimmt die lediglich lokale Erwärmung weniger Zeit in Anspruch. Zudem ist das Verfahren besonders einfach, weil die Bauteile nicht etwa in einem großen Ofen bzw. einer großen Kühlkammer temperiert werden müssen, sondern lediglich lokal zur Temperierung zu behandeln sind. Des Weiteren wird aufgrund der lediglich lokalen Temperierung, insbesondere Erwärmung, die anschließende Abklingzeit, insbesondere Abkühlzeit, verringert, sodass sich das Fügeverfahren insgesamt zeitlich verkürzt.

Da die Welle und/oder die Nabe lediglich lokal temperiert werden, werden sie insbesondere nicht als Ganzes temperiert, beispielsweise nicht als Ganzes in einen Ofen oder eine Kühlkammer eingebracht. Vielmehr wird insbesondere eine Temperierungsvorrichtung an der zu temperierenden Stelle des Bauteils angelegt, in dessen Nähe angeordnet und/oder auf diese gerichtet.

Allgemein bilden eine Fügefläche der Welle und eine Fügefläche der Nabe gemeinsam einen Presssitz. Zu diesem Zwecke sind die Fügeflächen insbesondere korrespondierend ausgebildet, sie weisen typischerweise eine Übermaßpassung auf.

Allgemein umfasst der Begriff Temperieren ein Erwärmen und/oder ein Kühlen.

Bevorzugt kann es vorgesehen sein, dass die Welle bzw. die Nabe an der wenigstens einen Fügefläche lokal temperiert wird.

Alternativ oder zusätzlich kann es mit Vorteil vorgesehen sein, dass die Welle bzw. die Nabe im Axialbereich der wenigstens einen Fügefläche lokal temperiert wird. Insofern hierin die Begriffe "axial" und "radial" verwendet werden, versteht es sich, dass sich diese auf die Wellenachse beziehen. Folglich bezieht sich der Begriff "Axialbereich" auf die axiale und somit zur Wellenachse parallele Erstreckung der Fügefläche. Beispielsweise kann das betreffende Bauteil dabei nur direkt an der Fügefläche erwärmt werden oder das Bauteil kann z.B. in diesem Axialbereich über seine gesamte radiale Erstreckung erwärmt werden. Im letzteren Fall wird gewissermaßen eine gedachte Scheibe des Bauteils erwärmt.

Einerseits kann etwa die wenigstens eine Fügefläche der Nabe lokal erwärmt werden. Anderseits kann z.B. die wenigstens eine Fügefläche der Welle lokal gekühlt werden. Grundsätzlich kann auch beides erfolgen.

Erfindungsgemäß ist vorgesehen, dass an der Welle und an der Nabe jeweils wenigstens zwei, insbesondere separate, Fügeflächen zur Bildung von zwei separaten Presssitzen ausgebildet werden. Insbesondere sind dabei die beiden wellen- und/oder nabenseitigen Fügeflächen einteilig verbunden.

Im Stand der Technik sind Welle-Nabe-Verbindungen, welche zwei Presssitze bzw. zwei korrespondierende Paare von Fügeflächen umfassen, grundsätzlich bekannt. Auf diese Weise wird zum Beispiel im Stand der Technik ein Kolben für eine Wälzkolbenpumpe als Nabe mit einer Antriebswelle für den Kolben verbunden. Die Presssitze bzw. Fügeflächen sind dabei insbesondere axial beabstandet. Bei dem Fügeverfahren des Standes der Technik ist es üblich, dass der Kolben bzw. die Nabe als Ganzes in einem Ofen erwärmt wird. Durch eine Temperaturerhöhung, dehnt sich die Nabe nicht nur in radialer Richtung - wie es zur Herstellung des Querpressverbands wünschenswert ist -, sondern auch in axialer Richtung aus. Je größer der Abstand zwischen den Fügeflächen ist, desto größer ist die axiale Verformung. Nach dem Fügen kühlt die Nabe ab und tendiert dazu, sich zusammenzuziehen, insbesondere axial zu verkürzen. Dies wird durch die Welle behindert, mit der die Nabe durch die Querpressverbindung fest verbunden ist. Es entstehen Eigenspannungen in Nabe und Welle. Die Welle ist axial auf Druck belastet und die Nabe bzw. der Kolben auf Zug. Dies kann zu einem Überschreiten von zulässigen Grenzspannungen und zu einer Schädigung der Bauteile führen.

Ein weiteres Ziel im Rahmen der Erfindung besteht somit darin, ein Fügeverfahren für eine Welle und eine Nabe mittels Querpressen mit wenigstens zwei Presssitzen dahingehend zu verbessern, dass die gefügten Bauteile weniger schadensanfällig sind und/oder eine verbesserte Lebensdauer aufweisen. Die erfindungsgemäß lediglich lokale Temperierung von Welle und/oder Nabe ermöglicht es auf einfache Weise und insbesondere unabhängig vom Abstand zwischen den beiden Fügeflächen, dieses Ziel zu erreichen.

Um den beschriebenen Eigenspannungen entgegenzuwirken, wird die Nabe, insbesondere der Kolben, bevorzugt an beiden Fügeflächen lokal erwärmt. Thermische Simulationen der lokalen Erwärmung im Zusammenhang mit Wälzkolbenpumpen haben gezeigt, dass sich der Kolben hauptsächlich in den Fügeflächen erwärmt. Eine Längenausdehnung tritt somit kaum auf. Unzulässig hohe Eigenspannungen im Kolben werden hierdurch vermieden.

Insbesondere kann es vorgesehen sein, dass wenigstens zwei Fügeflächen von Welle und/oder Nabe lokal temperiert werden. Bevorzugt wird die Welle bzw. die Nabe lediglich im Axialbereich der wenigstens zwei Fügeflächen bzw. Presssitze lokal temperiert. Die wenigstens zwei Fügeflächen der Welle und/oder der Nabe können insbesondere gleichzeitig temperiert werden.

Die wenigstens zwei Fügeflächen wenigstens eines der Bauteile können insbesondere separat ausgeführt sein. Bevorzugt sind die Fügeflächen gegenüber benachbarten Axialabschnitten, die nicht zu den Fügeflächen gehören und/oder nicht Teil des betreffenden Presssitzes sind, abgesetzt. Grundsätzlich ist auch an einem Bauteil eine durchgehende Fläche denkbar, die beide Fügeflächen des Bauteils bildet.

Erfindungsgemäß sind die Fügeflächen und/oder Presssitze, insbesondere in Bezug auf eine Wellen- und/oder Rotationsachse, axial beabstandet. Der Abstand zwischen den Fügeflächen und/oder den Presssitzen beträgt bevorzugt wenigstens 100 mm, insbesondere wenigstens 300 mm, insbesondere wenigstens 500 mm.

Bevorzugt ist vorgesehen, dass wenigstens eine Fügefläche, insbesondere beide Fügeflächen, der Nabe lokal erwärmt wird bzw. werden und/oder dass wenigstens eine Fügefläche, insbesondere beide Fügeflächen, der Welle lokal gekühlt wird bzw. werden. Grundsätzlich kann beispielsweise auch die Fügefläche der Nabe eines ersten Presssitzes lokal erwärmt werden und die Fügefläche der Welle eines zweiten Presssitzes lokal gekühlt werden. Auch können beispielsweise beide Fügeflächen der Nabe lokal erwärmt und beide Fügeflächen der Welle lokal gekühlt werden.

Grundsätzlich ist es auch möglich, die Nabe als Ganzes und außerdem die Welle lokal zwischen den Presssitzen lokal zu erwärmen. Dadurch wird die Welle in ähnlicher Weise wie die Nabe vor dem Schrumpfvorgang axial verlängert und somit sind die Eigenspannungen nach dem Fügen deutlich verringert.

Die Welle und/oder die Nabe kann insbesondere eine solche einer Vakuumpumpe sein. Die Vakuumpumpe kann insbesondere eine Vorvakuumpumpe und/oder eine Wälzkolbenpumpe sein. Das Verfahren eignet sich besonders für große Vakuumpumpen und große Wälzkolbenpumpen.

Gemäß einer Ausführungsform ist vorgesehen, dass das Temperieren ein induktives Erwärmen umfasst. Auf diese Weise kann mit einfachen Mitteln eine starke lokale Erwärmung erreicht werden. Dies erfolgt beispielsweise mittels einer Spulenanordnung.

Bevorzugt ist es vorgesehen, dass wenigstens eine Fügefläche der Nabe von radial innen erwärmt wird. Hierzu wird insbesondere eine Heizeinrichtung in die Nabenbohrung eingebracht. Somit wird unmittelbar dort, wo die nötige Temperaturausdehnung zur Herstellung des Pressverbandes gewünscht ist, die Wärme eingebracht und die Temperatur lokal erhöht.

Die Erfindung richtet sich auch auf eine Welle-Nabe-Verbindung, welche durch ein Verfahren nach vorstehend beschriebener Art gefügt ist, insbesondere für eine Vakuumpumpe. Die Erfindung richtet sich ferner auf eine Vakuumpumpe, insbesondere Wälzkolbenpumpe, umfassend eine Welle, insbesondere Rotorwelle, und eine mit der Welle verbundene Nabe, insbesondere mit einem pumpaktiven Rotorelement, wobei die Welle und die Nabe durch ein Verfahren nach vorstehend beschriebener Art gefügt sind.

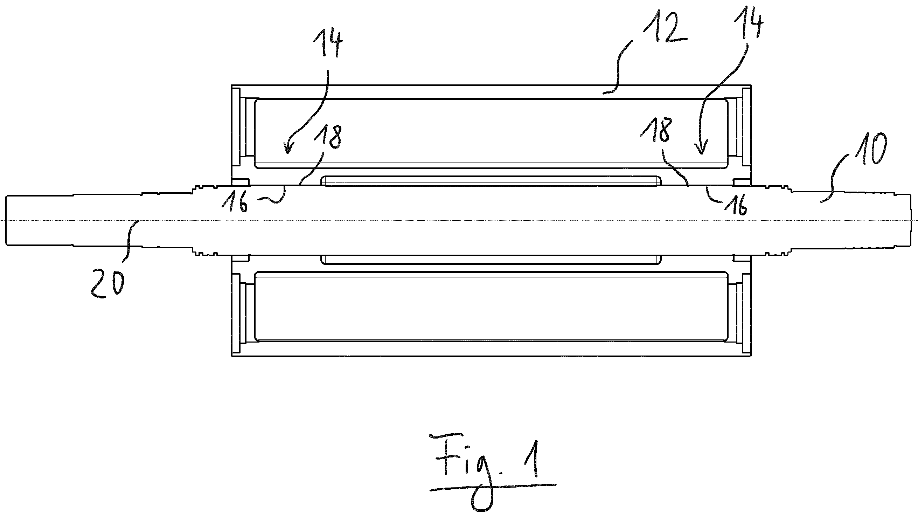

Die Erfindung wird nachfolgend lediglich beispielhaft anhand der einzigen schematischen Figur erläutert. Diese ist als Fig. 1 bezeichnet und zeigt eine Anordnung einer Welle und einer Nabe im Längsschnitt.

Konkret handelt es sich insbesondere um eine Rotorwelle 10 einer Wälzkolbenpumpe, die insbesondere zum Einsatz als Vorvakuumpumpe ausgebildet sein kann. Mit der Rotorwelle 10 ist ein Kolben 12 verbunden, der eine Nabe für die Welle bildet. In der Wälzkolbenpumpe bildet der Kolben 12 ein pumpaktives Rotorelement, d. h. er wirkt auf ein zu förderndes Fluid, um es von einem Einlass zu einem Auslass der Wälzkolbenpumpe zu fördern. Der Aufbau und die Funktionsweise einer Wälzkolbenpumpe sind dem Fachmann bekannt, so dass hierauf nicht näher eingegangen zu werden braucht.

Die Verbindung zwischen Rotorwelle 10 und Kolben 12 ist durch zwei Presssitze 14 hergestellt. Dabei umfasst ein jeweiliger Presssitz 14 zwei korrespondierende Fügeflächen 16 und 18, die an der Rotorwelle 10 und der Nabe bzw. dem Kolben 12 definiert sind.

Zur Herstellung der Verbindung werden erfindungsgemäß die Fügeflächen 16, 18 der Rotorwelle 10 und/oder der Nabe bzw. des Kolbens 12 zunächst lokal temperiert. Anschließend wird die Rotorwelle 10 in die Nabenbohrung des Kolbens 12 eingebracht und die Fügeflächen 16 und 18 werden in axiale Übereinstimmung gebracht, d. h. die Rotorwelle 10 wird in den Kolben 12 hineingesteckt. Nun nähern sich die Bauteile wieder der Umgebungstemperatur, klingen also ab, wobei die hiermit einhergehende Formänderung einen Pressverband zwischen den Fügeflächen 16 und 18 herstellt. Insbesondere werden die Fügeflächen 18 der Nabe bzw. des Kolbens 12 zu diesem Zweck lokal erwärmt, beispielsweise induktiv. Die Erwärmung kann beispielsweise von radial innen in Bezug auf die hier angedeutete Wellenachse 20 erfolgen. Insbesondere wird zu diesem Zweck eine Heizeinrichtung in der Nabenbohrung, welche dem von der Fügefläche 18 definierten Zylinder entspricht, angeordnet.

Da der Kolben 12 nicht als Ganzes erwärmt wird, bleibt er axial zwischen den Fügeflächen 18 bzw. den Presssitzen 14 weitgehend kalt und behält somit im Wesentlichen seine axiale Länge. Somit wird beim anschließenden Abkühlen auch keine axiale Zugspannung in den Kolben 12 bzw. keine axiale Druckspannung in die Welle 10 eingebracht. Die Eigenspannungen des verbundenen Bauteils sind somit reduziert und die Gefahr einer Schädigung ist gemindert. Insbesondere wird hierdurch die Lebensdauer des Bauteils erhöht.

Es zeigt sich, dass die Erfindung einen kostengünstigen Fügevorgang einer Welle-Nabe-Verbindung bereitstellt, nämlich durch lokale Erwärmung der Kontaktstellen und insbesondere die hierdurch ermöglichte Vermeidung von unzulässig hohen Eigenspannungen im gefügten Zustand.

### Bezugszeichenliste

- 10: Rotorwelle
- 12: Kolben
- 14: Presssitz
- 16: Fügefläche
- 18: Fügefläche
- 20: Wellenachse

## Patentansprüche

1. Verfahren zum Fügen einer Welle (10) mit einer Nabe (12), nämlich einer Rotorwelle einer Vakuumpumpe mit einer Nabe, welche insbesondere ein pumpaktives Rotorelement trägt oder umfasst;
wobei die Welle (10) und die Nabe (12) mittels Querpressen gefügt werden,
wobei an der Welle (10) und an der Nabe (12) jeweils wenigstens eine Fügefläche (16, 18) zur Bildung wenigstens eines Presssitzes (14) ausgebildet werden,
wobei die Welle (10) und/oder die Nabe (12) zur Herstellung der Querpressverbindung lediglich lokal temperiert wird,
wobei an der Welle (10) und an der Nabe (12) jeweils wenigstens zwei Fügeflächen (16, 18) zur Bildung von zwei separaten Presssitzen (14) ausgebildet werden, und
wobei die Fügeflächen (16, 18) und/oder die Presssitze (14) axial beabstandet sind.

2. Verfahren nach Anspruch 1,
wobei die Welle (10) bzw. die Nabe (12) an der wenigstens einen Fügefläche (16, 18) lokal temperiert wird.

3. Verfahren nach Anspruch 1 oder 2,
wobei die Welle (10) bzw. die Nabe (12) im Axialbereich der wenigstens einen Fügefläche lokal temperiert wird.

4. Verfahren nach wenigstens einem der vorstehenden Ansprüche, wobei die wenigstens eine Fügefläche (18) der Nabe (12) lokal erwärmt wird.

5. Verfahren nach wenigstens einem der vorstehenden Ansprüche, wobei die wenigstens eine Fügefläche (16) der Welle (10) lokal gekühlt wird.

6. Verfahren nach wenigstens einem der vorstehenden Ansprüche, wobei wenigstens zwei Fügeflächen (16, 18) von der Welle (10) und/oder der Nabe (12) lokal temperiert werden.

7. Verfahren nach wenigstens einem der vorstehenden Ansprüche, wobei der Abstand zwischen den Fügeflächen (16, 18) und/oder den Presssitzen (14) wenigstens 100 mm, insbesondere wenigstens 500 mm, beträgt.

8. Verfahren nach wenigstens einem der vorstehenden Ansprüche, wobei die Fügeflächen (16) der Welle (10) lokal gekühlt werden und/oder wobei die Fügeflächen (18) der Nabe (12) lokal erwärmt werden.

9. Verfahren nach wenigstens einem der vorstehenden Ansprüche, wobei die Welle (10) und/oder die Nabe (12) eine solche einer Vakuumpumpe, insbesondere einer Vorvakuumpumpe und/oder einer Wälzkolbenpumpe, ist.

10. Verfahren nach wenigstens einem der vorstehenden Ansprüche, wobei das Temperieren ein induktives Erwärmen umfasst.

11. Verfahren nach wenigstens einem der vorstehenden Ansprüche,
wobei wenigstens eine Fügefläche (18) der Nabe (12) von radial innen erwärmt wird.

12. Welle-Nabe-Verbindung, welche durch ein Verfahren nach einem der vorstehenden Ansprüche gefügt ist, insbesondere für eine Vakuumpumpe.

13. Vakuumpumpe, insbesondere Wälzkolbenpumpe, umfassend eine Welle (10), insbesondere Rotorwelle, und eine mit der Welle verbundene Nabe (12), insbesondere mit einem pumpaktiven Rotorelement, wobei die Welle (10) und die Nabe (12) durch ein Verfahren nach einem der Ansprüche 1 bis 11 gefügt sind.

## Claims

1. A method of joining a shaft (10) with a hub (12),
namely a rotor shaft of a vacuum pump with a hub which in particular carries or comprises a pump-active rotor element,
wherein the shaft (10) and the hub (12) are joined by means of transverse pressing,
wherein at least one joining surface (16, 18) for forming at least one press fit (14) is formed at the shaft (10) and at the hub (12) in each case, wherein the shaft (10) and/or the hub (12) is/are only locally temperature controlled to establish the transverse press connection,
wherein at least two joining surfaces (16, 18) for forming two separate press fits (14) are formed at the shaft (10) and at the hub (12) in each case, and wherein the joining surfaces (16, 18) and/or the press fits (14) are axially spaced apart.

2. A method in accordance with claim 1,
wherein the shaft (10) or the hub (12) is locally temperature controlled at the at least one joining surface (16, 18).

3. A method in accordance with claim 1 or claim 2,
wherein the shaft (10) or the hub (12) is locally temperature controlled in the axial region of the at least one joining surface.

4. A method in accordance with at least one of the preceding claims,
wherein the at least one joining surface (18) of the hub (12) is locally heated.

5. A method in accordance with at least one of the preceding claims,
wherein the at least one joining surface (16) of the shaft (10) is locally cooled.

6. A method in accordance with at least one of the preceding claims,
wherein at least two joining surfaces (16, 18) of the shaft (10) and/or the hub (12) are locally temperature controlled.

7. A method in accordance with at least one of the preceding claims,
wherein the spacing between the joining surfaces (16, 18) and/or the press fits (14) amounts to at least 100 mm, in particular at least 500 mm.

8. A method in accordance with at least one of the preceding claims, wherein the joining surfaces (16) of the shaft (10) are locally cooled, and/or wherein the joining surfaces (18) of the hub (12) are locally heated.

9. A method in accordance with at least one of the preceding claims,
wherein the shaft (10) and/or the hub (12) is/are such a one of a vacuum pump, in particular a backing pump and/or a Roots pump.

10. A method in accordance with at least one of the preceding claims,
wherein the temperature control comprises an inductive heating.

11. A method in accordance with at least one of the preceding claims,
wherein at least one joining surface (18) of the hub (12) is heated from radially inside.

12. A shaft-hub connection which is joined by a method in accordance with any one of the preceding claims, in particular for a vacuum pump.

13. A vacuum pump, in particular a Roots pump, comprising a shaft (10), in particular a rotor shaft, and a hub (12) which is connected to the shaft and which in particular comprises a pump-active rotor element, wherein the shaft (10) and the hub (12) are joined by a method in accordance with any one of the claims 1 to 11.

## Revendications

1. Procédé pour assembler un arbre (10) avec un moyeu (12), à savoir un arbre de rotor d'une pompe à vide avec un moyeu qui porte ou comprend en particulier un élément de rotor actif en pompage,
dans lequel
l'arbre (10) et le moyeu (12) sont assemblés par pressage transversal,
au moins une surface d'assemblage (16, 18) respective est formée sur l'arbre (10) et sur le moyeu (12) pour former au moins un ajustement serré (14), et
l'arbre (10) et/ou le moyeu (12) est tempéré seulement localement pour réaliser la liaison par pressage transversal,
au moins deux surfaces d'assemblage (16, 18) respectives sont formées sur l'arbre (10) et sur le moyeu (12) pour former deux ajustements serrés séparés (14), et
les surfaces d'assemblage (16, 18) et/ou les ajustements serrés (14) sont espacé(e)s axialement.

2. Procédé selon la revendication 1,
dans lequel l'arbre (10) ou le moyeu (12) est tempéré localement au niveau de ladite au moins une surface d'assemblage (16, 18).

3. Procédé selon la revendication 1 ou 2,
dans lequel l'arbre (10) ou le moyeu (12) est tempéré localement dans la zone axiale de ladite au moins une surface d'assemblage.

4. Procédé selon l'une au moins des revendications précédentes,
dans lequel ladite au moins une surface d'assemblage (18) du moyeu (12) est chauffée localement.

5. Procédé selon l'une au moins des revendications précédentes, dans lequel ladite au moins une surface d'assemblage (16) de l'arbre (10) est refroidie localement.

6. Procédé selon l'une au moins des revendications précédentes, dans lequel au moins deux surfaces d'assemblage (16, 18) de l'arbre (10) et/ou du moyeu (12) sont tempérées localement.

7. Procédé selon l'une au moins des revendications précédentes, dans lequel la distance entre les surfaces d'assemblage (16, 18) et/ou entre les ajustements serrés (14) est d'au moins 100 mm, en particulier d'au moins 500 mm.

8. Procédé selon l'une au moins des revendications précédentes, dans lequel les surfaces d'assemblage (16) de l'arbre (10) sont refroidies localement, et/ou
les surfaces d'assemblage (18) du moyeu (12) sont chauffées localement.

9. Procédé selon l'une au moins des revendications précédentes, dans lequel l'arbre (10) et/ou le moyeu (12) est celui d'une pompe à vide, en particulier d'une pompe à vide préliminaire et/ou d'une pompe Roots.

10. Procédé selon l'une au moins des revendications précédentes, dans lequel la mise en température inclut un chauffage par induction.

11. Procédé selon l'une au moins des revendications précédentes, dans lequel au moins une surface d'assemblage (18) du moyeu (12) est chauffée radialement de l'intérieur.

12. Liaison arbre-moyeu assemblée par un procédé selon l'une des revendications précédentes, en particulier pour une pompe à vide.

13. Pompe à vide, en particulier pompe Roots, comprenant un arbre (10), en particulier un arbre de rotor, et un moyeu (12) relié à l'arbre, comprenant en particulier un élément de rotor actif en pompage, l'arbre (10) et le moyeu (12) étant assemblés par un procédé selon l'une des revendications 1 à 11.
